# EUROPEAN PATENT APPLICATION

(11) **EP 4 576 897 A1**
(43) Date of publication of application: **25.06.2025**
(21) Application number: 22960060.6
(22) Date of filing: 29.09.2022
(51) Int. Cl.: H04W 72/04

(54) **COMMUNICATION METHOD, COMMUNICATION APPARATUS, COMMUNICATION SYSTEM, COMPUTING DEVICE, AND STORAGE MEDIUM**

(71) Applicant: Siemens Aktiengesellschaft, 80333 München (DE)
(72) Inventor: MA, Wanli, Beijing 100102 (CN); ZHANG, Jie, Beijing 100102 (CN); LAMPE, Mattias, Beijing 100102 (CN); TAN, Shuang, Beijing 100102 (CN); WANG, Li, Beijing 100102 (CN)
(74) Representative: Isarpatent
(86) International application number: PCT/CN2022/122724
(87) International publication number: WO 2024/065423

(57) **Abstract**

A communication method, a communication apparatus, a communication system, a computing device, and a storage medium are disclosed. The communication method includes: a scheduling policy determining step: determining a scheduling policy of access points (AP) for clients according to a predetermined communication optimization target; a scheduling plan determining step: determining a scheduling plan based on the scheduling policy, where the scheduling plan at least includes which client is to be scheduled by each AP at a current scheduling time slot; a scheduling instruction step: transmitting the scheduling plan to the AP, to instruct the AP to schedule, according to the scheduling plan, the corresponding client for communication; a scheduling state judging step: acquiring scheduling state information from the AP, where the scheduling state information includes whether the scheduling is successful; and a repetitive control step: determining a scheduling plan of a next scheduling time slot based on the scheduling state information and a predetermined decision algorithm, and returning to the scheduling instruction step to perform the method.

## Description

### TECHNICAL FIELD

The present disclosure generally relates to the field of communication technologies, and more specifically, a communication method, a communication apparatus, a communication system, a computing device, and a storage medium.

### BACKGROUND

The ongoing digital transformation of industry would not be possible without modern communication technologies. To offer companies the optimal infrastructure for exchanging all types of data, a series of special industrial wireless local area network (iWLAN) products have been developed currently. The products have unique added functions that meet specific requirements of industrial Wi-Fi inside a control cabinet, indoors, and outdoors, e.g. an industrial parallel redundancy protocol (iPRP) or an industrial point coordination function (iPCF).

The iPRP is the extension of a parallel redundancy protocol (PRP) by wireless data transmission via the IWLAN. With the iPRP, a highly available, redundant, and uninterrupted connection can be realized in a wireless network. It is based on duplicating Layer 2 frames over two independent (redundant) wireless links.

Another important technology for wireless transmission of PROFINET traffic is the iPCF technology. The iPCF replaces a random channel access scheme of conventional WLAN systems (DCF) with a polled channel access scheme. To be specific, a client transmits uplink data only upon request (poll) by an AP.

The iPRP and the iPCF have their own specialized application scenarios in industry, and can provide corresponding technical advantages.

But if the iPRP and the iPCF are just combined together simply, the AP and the client are not coordinated in the setup. This may result in some wireless performance issues.

### SUMMARY

A brief overview of the present disclosure is given below to provide a basic understanding of certain aspects of the present disclosure. It should be understood that this summary is not an exhaustive overview of the present disclosure. It is not intended to determine key or important parts of the present disclosure, nor is it intended to limit the scope of the present disclosure. The purpose is merely to present some concepts in a simplified form as a prelude to the more detailed description that is discussed later.

In view of this, the present disclosure proposes a communication method that may combine technical advantages of a redundancy technology (e.g. iPRP) and a scheduling access technology (e.g. iPCF).

According to one aspect of the present disclosure, a communication method for an industrial wireless communication system is provided. The industrial wireless communication system includes a first terminal device, second terminal devices, a plurality of APs, and a plurality of clients. The first terminal device is associated with the plurality of APs. Each of the second terminal devices is associated with at least two clients in the plurality of clients. At least two of the associated clients form a redundant client pair. All APs are time-synchronized. The APs implement communication between the first terminal device and the second terminal devices by scheduling the clients. The method includes:
a scheduling policy determining step: determining a scheduling policy of the APs for the clients according to a predetermined communication optimization target;
a scheduling plan determining step: determining a scheduling plan based on the scheduling policy, where the scheduling plan at least includes which client is to be scheduled by each AP at a current scheduling time slot;
a scheduling instruction step: transmitting the scheduling plan to the AP, to instruct the AP to schedule, according to the scheduling plan, the corresponding client for communication;
a scheduling state judging step: acquiring scheduling state information from the AP, where the scheduling state information includes whether the scheduling is successful; and
a repetitive control step: determining a scheduling plan of a next scheduling time slot based on the scheduling state information and a predetermined decision algorithm, and returning to the scheduling instruction step to perform the method.

In such a mode, a comprehensive solution is provided. Scheduling of a client by an AP may be coordinated. Different client scheduling schemes are used according to requirements on communication performance, to satisfy optimization for different communication performance requirements.

Optionally, in an example of the foregoing aspect, the scheduling policy includes any one of the following:
scheduling, by the AP, only one client in the redundant client pair at a time; and
simultaneously scheduling, by the AP, two clients in one redundant client pair.

Optionally, in an example of the foregoing aspect, the communication optimization target includes any one of the following:
improving data throughput, reducing a communication latency, and reducing a packet loss rate.

Optionally, in an example of the foregoing aspect, the scheduling plan further includes at least one of the following:
an expected uplink data type and a predetermined timeout period if no response from the client is received.

Optionally, in an example of the foregoing aspect, a decision factor of the predetermined decision algorithm includes:
each client is scheduled at least once in a cycle, and if no response is received from the client, when to schedule again and a quantity of available scheduling time slots are determined based on availability of the scheduling time slots.

According to another aspect of the present disclosure, a communication method for an industrial wireless communication system is provided. The industrial wireless communication system includes a first terminal device, second terminal devices, a plurality of APs, and a plurality of clients. The first terminal device is associated with the plurality of APs. All APs are time-synchronized. Each of the second terminal devices is associated with at least two clients in the plurality of clients. At least two of the associated clients form a redundant client pair. One client in the redundant client pair is marked with a first feature, and the other client is marked with a second feature. All APs are time-synchronized. Each AP maintains two lists for the clients associated with the AP. The first list includes the client having the first feature in the redundant client pair. The second list includes the other client having the second feature in the redundant client pair. The AP knows a redundant client partner of each client associated therewith and a redundant AP partner associated with the redundant client partner. The method includes:
sequentially scheduling, by each AP, the corresponding client in the first list thereof;
informing, by the AP, the corresponding redundant AP partner of whether the scheduling is successful; and
if the scheduling is successful, stopping scheduling, by the redundant AP partner, the corresponding redundant client partner in a current scheduling cycle, and if the scheduling fails, scheduling, by the redundant AP partner, the corresponding redundant client partner in a case that the redundant client partner has not been invoked.

In this mode, APs can exchange information with each other, scheduling of clients is coordinated, unnecessary redundant transmission is reduced, and network resources are saved, thereby improving data throughput.

Optionally, in an example of the foregoing aspect, the method further includes:
when a client leaves an associated AP, deleting, by the corresponding AP, the client from a list maintained by the AP; and if a new client is associated with the AP, adding, by the AP, the client to a corresponding list according to the client.

In this mode, management on joining and leaving of clients may be conveniently implemented.

According to another aspect of the present disclosure, a communication apparatus in an industrial wireless communication system is provided. The industrial wireless communication system includes a first terminal device, second terminal devices, a plurality of APs, and a plurality of clients. The first terminal device is associated with the plurality of APs. Each of the second terminal devices is associated with at least two clients in the plurality of clients. At least two of the associated clients form a redundant client pair. All APs are time-synchronized. The APs implement communication between the first terminal device and the second terminal devices by scheduling the clients. The communication apparatus includes:
a scheduling policy determining unit, configured to determine a scheduling policy of the APs for the clients according to a predetermined communication optimization target;
a scheduling plan determining unit, configured to determine a scheduling plan based on the scheduling policy, where the scheduling plan at least includes which client is to be scheduled by each AP at a current scheduling time slot;
a scheduling instruction unit, configured to transmit the scheduling plan to the AP, to instruct the AP to schedule, according to the scheduling plan, the corresponding client for communication;
a scheduling state judging unit, configured to acquire scheduling state information from the AP, where the scheduling state information includes whether the scheduling is successful; and
a repetitive control unit, configured to determine a scheduling plan of a next scheduling time slot based on the scheduling state information and a predetermined decision algorithm.

According to another aspect of the present disclosure, an industrial wireless communication system is provided, including a first terminal device, second terminal devices, a plurality of APs, a plurality of clients, and the communication apparatus according to the foregoing. The communication apparatus controls scheduling of the APs for the clients, to implement communication between the first terminal device and the second terminal devices.

According to another aspect of the present disclosure, a computing device is provided, including: at least one processor; and a memory coupled to the at least one processor, where the memory is configured to store instructions, and the instructions, when executed by the at least one processor, cause the at least one processor to perform the method described above.

According to another aspect of the present disclosure, a non-transitory machine-readable storage medium storing executable instructions is provided. The instructions, when executed, cause a machine to perform the method described above.

According to another aspect of the present disclosure, a computer program is provided, including computer-executable instructions. The computer-executable instructions, when executed, cause at least one processor to perform the method described above.

According to another aspect of the present disclosure, a computer program product tangibly stored on a computer-readable medium and including computer-executable instructions is provided. The computer-executable instructions, when executed, cause at least one processor to perform the method described above.

According to the communication method and the communication apparatus of the present disclosure, two solutions are provided, which are centralized and decentralized, and may be applicable to multiple different industrial scenarios. Different communication performance optimization targets, such as improving data throughput, are very flexibly achieved by using different scheduling mechanisms.

### BRIEF DESCRIPTION OF THE DRAWINGS

Referring to the descriptions of the embodiments of the present disclosure in combination with the accompanying drawings, the foregoing and other objectives, features, and advantages of the present disclosure may be more easily understood. Components in the accompanying drawings are merely used for demonstrating the principle of the present disclosure. In the accompanying drawings, the same or similar technical features or components may be represented by using the same or similar reference numerals. In the accompanying drawings:
FIG. 1 is a simplified schematic diagram of an industrial wireless communication system to which a communication method of the present disclosure may be used;
FIG. 2 is another schematic diagram of an industrial wireless communication system to which a communication method of the present disclosure may be used;
FIG. 3 is a flowchart of an exemplary process of a communication method according to an embodiment of the present disclosure;
FIG. 4 is a flowchart of an exemplary process of a communication method according to another embodiment of the present disclosure;
FIG. 5 shows a block diagram of an exemplary configuration of a communication apparatus for performing the communication method shown in FIG. 2; and
FIG. 6 shows a block diagram of a computing device for implementing a communication method according to an embodiment of the present disclosure.

Reference numerals are as follows:

| | | | |
|---|---|---|---|
| AP1, AP2, AP3: | AP | 102, 202: | First terminal device |
| STA1, STA2, STA3, STA4, STA1a, STA1b, STA2a, STA2b, STA3a, STA3b, STA4a, STA4b, STA5a, STA5b: | Client | | |
| 106-1, 106-2, 108: | Redundancy box | | |
| 104-1, 104-2, 204-1, 204-2, 204-3, 204-4, 204-5: | Second terminal device | | |
| 100, 200: | Industrial wireless communication system | | |
| 300: | Communication method | S302, S304, S306, S308, S310: | Step |
| 400: | Communication method | S402, S404, S406, S408: | Step |
| 500: | Communication apparatus | 502: | Scheduling policy determining unit |
| 504: | Scheduling plan determining unit | 506: | Scheduling instruction unit |
| 508: | Scheduling state judging unit | 510: | Repetitive control unit |
| 600: | Computing device | 602: | Processor |
| 604: | Memory | | |

### DETAILED DESCRIPTION

A subject described in this specification is discussed now with reference to exemplary implementations. It should be understood that, discussion of the implementations is merely intended to make a person skilled in the art better understand and implement the subject described in this specification, and is not intended to limit the protection scope of the claims, the applicability, or examples. Changes may be made to the functions and arrangements of the discussed elements without departing from the protection scope of the content of the present disclosure. Various processes or components may be omitted, replaced, or added in each example according to requirements. For example, the described method may be performed according to a sequence different from the sequence described herein, and steps may be added, omitted, or combined. In addition, features described in some examples may also be combined in other examples.

As used in this specification, the term "include" and variants thereof represent open terms, and means "including but is not limited to". The term "based on" represents "at least partially based on". The terms "one embodiment" and "an embodiment" represent "at least one embodiment". The term "another embodiment" represents "at least one another embodiment". The terms "first", "second", and the like may represent different objects or the same object. Other definitions may be included explicitly or implicitly in the following. Unless otherwise clearly specified, the definition of one term is consistent in the entire specification.

In view of this, the present disclosure proposes a communication solution that may combine technical advantages of an iPRP and an iPCF.

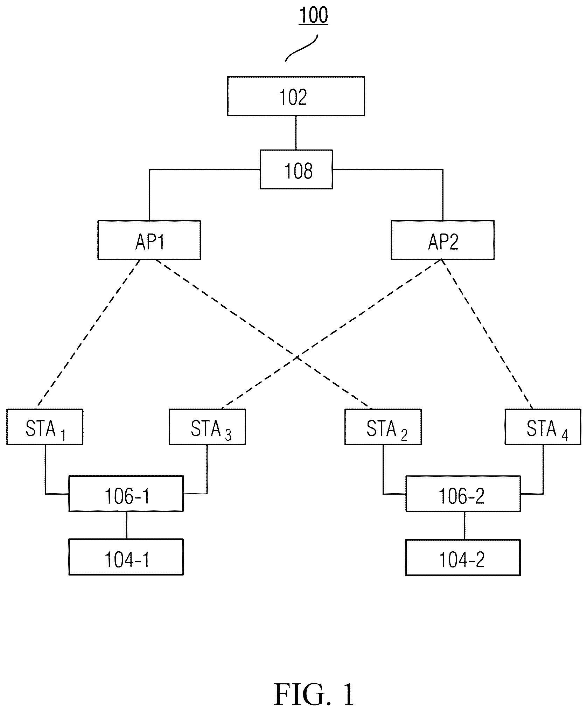

FIG. 1 is a simplified schematic diagram of an industrial wireless communication system to which a communication method of the present disclosure may be used.

The industrial wireless communication system 100 shown in FIG. 1 includes a first terminal device 102, second terminal devices 104-1 and 104-2, APs AP1 and AP2, clients STA1, STA2, STA3, and STA4, and redundancy boxes 106-1, 106-2, and 108.

All the APs and the clients (STA) may support iPRP and iPCF functions, or may implement features of similar functions of redundancy and scheduled access modes.

Herein, the first terminal device may be, for example, a device such as a server, a cloud, or a computer. The second terminal device may be, for example, a device such as a PLC, an AGV, or a gateway. The redundancy box is configured to change one path into two paths or combine two paths into one path.

FIG. 1 shows one first terminal device and two second terminal devices as an example for description. It may be understood that there may be any plurality of devices in the communication system as required and the quantity is not limited to that shown in FIG. 1.

It is assumed that STA1 and STA3 are a pair of redundant WLAN client devices, and are connected to a same terminal device 104-1 (e.g. a typical Profinet IO (PNIO) device) by using the "redundancy box 106-1". Therefore, a same Layer 2 service needs to be transmitted/received to/from respective APs (AP1 and AP2). The same is true for STA2 and STA4, which are connected to the terminal device 104-2 by using the redundancy box 106-2.

For the sake of simplicity, it is assumed in FIG. 1 that both redundant client pairs are served by the same pair of APs, i.e., AP1 and AP2. (In practice, as clients can roam freely within larger wireless networks, the mapping of clients to APs can be more complex and change over time.) As further simplifications, it is assumed that all traffic is periodic PNIO traffic, and it is assumed that all data frames have the same duration. In an actual IWLAN network, a plurality of APs may belong to different LAN networks. One or two WLAN clients may be deployed on each terminal device. There may also be a more complex mapping relationship between the APs and the clients. These simplifications only aim at describing the problem and the solution more clearly but are not restricting the protection scope of the present disclosure.

In a conventional iPRP communication mode of the WLAN, a basic feature of the iPRP is that a redundancy box may copy data frames, and the two data frames have a same source MAC address and different target MAC addresses. Then, the data frames are transmitted to corresponding clients by using APs, respectively. Upon receiving acknowledgment of a transmitted downlink data packet of the client, the AP informs a redundant AP of the transmission success so that the redundant AP can remove the corresponding data packet from its transmit queue and avoid wasting time and radio resources on a duplicate transmission. The foregoing descriptions only show downlink data, and the same principle is also true for uplink data. By default, there is no coordination mechanism and no time synchronization between APs. Therefore, when the two APs transmit/receive data to/from clients (STA), several possible scheduling patterns may occur.

Scheduling pattern 1: AP1 schedules STA1 and AP2 schedules STA3, or AP1 schedules STA2 and AP2 schedules STA4 at the same time. The characteristic of this pattern is that the two STAs forming a redundant client pair are scheduled simultaneously by the respective APs.

In the present disclosure, one client in the redundant client pair is referred to as a redundant client partner of the other client. APs respectively corresponding to the two clients in the redundant client pair form a redundant AP pair, and one AP is referred to as a redundant AP partner of the other AP.

Scheduling pattern 2: AP1 schedules STA1 and AP2 schedules STA4, or AP1 schedules STA2 and AP2 schedules STA3 at the same time. The characteristic of this pattern is that the two clients forming the redundant client pair are scheduled at different (overlap-free) times.

Scheduling pattern 3: AP1 schedules STA1 and AP2 schedules STA4, or AP1 schedules STA2 and AP2 schedules STA3, or AP1 schedules STA2 and AP2 schedules STA4, or other possible scheduling modes. The characteristic of this pattern is that the scheduling times of the two clients forming the redundant client pair are overlapping by some random amount.

Because there is no coordinated scheduling on the AP side, when the AP schedules the client, the several scheduling patterns may exist simultaneously or emerge in a hybrid mode.

It can be seen that scheduling pattern 2 is a case that two copies of a same data packet are transmitted without time overlapping. This feature may cause data to be successfully transmitted by AP1, and therefore be discarded by AP2. In this way, AP2 may transmit another piece of data by using this free time slot, and this has a same function for the client: The data is successfully transmitted by STA1, and is discarded by STA3. In this way, it is unnecessary for AP1 to schedule STA2 again and for AP2 to schedule STA3 again. Then, AP1 and AP2 may simultaneously use a free gap to transmit another piece of data. However, in scheduling pattern 1 and scheduling pattern 3, two copies of a same data packet are transmitted with time overlapping. In the two cases, AP2 cannot transmit other data by using a free time slot because another copy of the same data packet is transmitted on a redundant link before transmission on a first link is completed. However, scheduling pattern 1 and scheduling pattern 3 can ensure real-time data transmission and a redundancy requirement.

Therefore, if the scheduling pattern can be controlled, for example, only scheduling pattern 2 is used to coordinate a data transmitting behavior of the AP, unnecessary scheduling for the AP can be avoided. For example, when data is already successfully received from one client in the redundant client pair, it is unnecessary to schedule a redundant client partner thereof. In a case of very good wireless connectivity, many available free time slots may be generated. If the time slots are used to invoke a client, more data may be transmitted, thereby improving data throughput.

A typical scenario of applying the technical solution of the present disclosure is described above by using improving the data throughput as an example. If another scheduling pattern is designed, for example, scheduling pattern 1 is used, a communication time limit of some devices may be reduced.

Based on the foregoing analysis, the present disclosure proposes a comprehensive solution, which can coordinate scheduling of a client by an AP, and optimize target communication performance by using different client scheduling schemes according to requirements on communication performance.

The "communication performance" here is a general concept and covers a wide range, like high throughput, low latency, etc. The technical solution of the present disclosure is not aimed at specific communication performance, but is a general solution that can satisfy different communication performance requirements.

Specifically, the present disclosure proposes two implementations. Specific implementations of the present disclosure are described in detail below with reference to the accompanying drawings.

In the technical solutions of the present disclosure, APs and clients satisfy the following basic requirements.
1. The APs and the clients support the iPRP and the iPCF at the same time, or can implement similar features of redundancy and scheduled access modes.
2. To coordinate scheduling behaviors of the APs, time synchronization needs to be established between all the APs. For example, such time synchronization may be implemented by using a mechanism, such as an NTP, a PTP, or a gPTP, which is usually used in a timesensitive network (TSN). It should be noted that the clients do not need to be synchronized, and requirements on synchronization accuracy are not very high. In addition, a beacon timing or physical layer timing of the APs does not need to be synchronized either, because a purpose of synchronization is to coordinate polling schedules only.

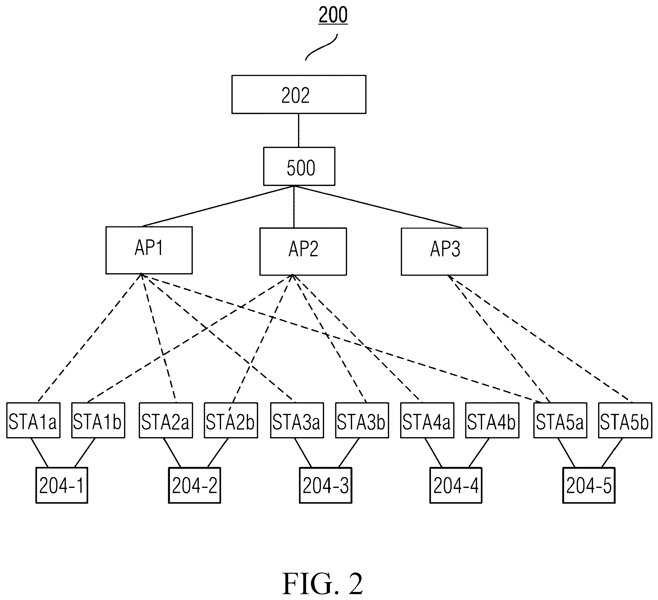

FIG. 2 is another schematic diagram of an industrial wireless communication system to which a communication method of the present disclosure may be used.

The industrial wireless communication system includes a first terminal device 202, second terminal devices 204-1, 204-2, 204-3, 204-4, and 204-5, APs AP1, AP2, and AP3, clients STA1a, STA1b, STA2a, STA2b, STA3a, STA3b, STA4a, STA4b, STA5a, and STA5b. Herein, the first terminal device may be, for example, a device such as a server, a cloud, or a computer. The second terminal device may be, for example, a device such as a PLC, an AGV, or a gateway. For the sake of simplicity, the redundancy boxes are omitted in FIG. 2.

Block 500 in FIG. 2 is a communication apparatus for coordinating scheduling of an AP for a client according to an embodiment of the present disclosure, which is described in detail below.

The communication between one first terminal device and five second terminal devices is used as an example for description in FIG. 2. It may be understood that there may be any plurality of devices in the communication system as required and the quantity is not limited to that shown in FIG. 2.

In FIG. 2, the first terminal device is associated with three APs, and each of the second terminal devices is associated with two clients. The two clients form a redundant client pair. For example, STAla and STAlb form a redundant client pair. The communication between the first terminal device and the second terminal devices is implemented through the communication between APs and clients. Herein, all the APs are time-synchronized. In the communication system according to an embodiment of the present disclosure, an example in which one second terminal device is associated with two clients and the two clients are used as redundant clients is used for description. A person skilled in the art may understand that one terminal device may be associated with more clients and there may be more than two clients used as redundant clients, which is not described in detail in this specification.

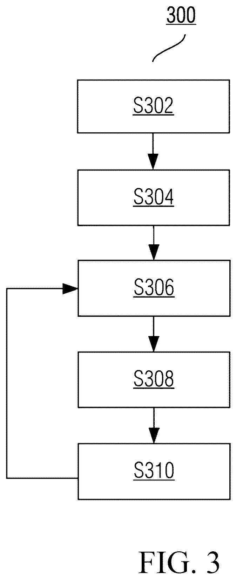

FIG. 3 is a flowchart of an exemplary process of a communication method 300 according to an embodiment of the present disclosure. Execution steps of the communication method 300 according to an embodiment of the present disclosure are described in detail with reference to FIG. 3 and FIG. 2.

The communication method 300 is a communication method used in an industrial wireless communication system 200.

In FIG. 3, first, in block S302, a scheduling policy determining step is executed to determine a scheduling policy of APs for clients according to a predetermined communication optimization target.

The communication optimization target herein may be to improve data throughput, reduce a communication latency, reduce a packet loss rate, and the like. A user may set an appropriate communication optimization target according to requirements of a specific application scenario, to determine different scheduling policies.

For example, the scheduling policy may be that the AP schedules only one client in one redundant client pair at a time, the AP schedules two clients in one redundant client pair at the same time, and the like. The user may alternatively design other scheduling policies as required.

Next, in block S304, a scheduling plan determining step is executed to determine a scheduling plan based on the scheduling policy, where the scheduling plan at least includes which client is to be scheduled by each AP at a current scheduling time slot.

In this step, scheduling of all clients needs to be planned based on the scheduling policy. In addition to the clients to be scheduled by the AP, the scheduling plan may further include information such as an expected uplink data type and a predetermined timeout period if no response from the client is received. It may be understood that information included in the scheduling plan is not limited thereto, and may be set as required. Details are not described herein again.

Next, in block S306, a scheduling instruction step is executed to transmit the scheduling plan determined in the foregoing step to the AP, to instruct the AP to schedule, according to the scheduling plan, the corresponding client for communication.

Next, in block S308, a scheduling state judging step is executed to acquire scheduling state information from the AP, where the scheduling state information includes whether the scheduling is successful.

This step is used to check whether each AP successfully invokes the client, for example, whether the AP receives a response message of the client.

In block S310, a scheduling plan of a next scheduling time slot is determined based on the scheduling state information and a predetermined decision algorithm, and the scheduling instruction step is continuously executed after returning to block S306.

The decision algorithm may be predetermined according to an actual user requirement and a communication optimization target. For example, if PROFINET service data needs to be transmitted and data throughput needs to be improved, the decision algorithm may consider at least the following factors:
1. Each client is scheduled at least once in a cycle.
2. If no response is received from the client, when to schedule again is determined based on availability of scheduling time slots.
3. The quantity of available scheduling time slots is calculated.

In step S310, a scheduling plan for next scheduling is determined according to whether the previous scheduling is successful and a predetermined decision algorithm. Then step S306 is performed again, to instruct the AP to schedule a corresponding client according to the scheduling plan.

The communication method 300 described above with reference to FIG. 3 is a centralized solution. In this solution, there may be general understanding and control on an overview of the whole communication system, for example, a network structure, a relationship between different devices, a working state of each device, and a mapping relationship between an AP and a client. Scheduling of the clients by the APs may be coordinated according to an actual user requirement and a communication optimization target, thereby providing an overall optimized scheduling mechanism for the whole communication system.

The present disclosure further proposes a decentralized solution. In this solution, there is no understanding of an overall overview and a global scheduling mechanism for the whole system. However, APs can exchange information with each other and coordinate scheduling of the clients to avoid the unnecessary redundant data packet transmission.

A specific example of the decentralized solution is described below.

First, some initial setting conditions that need to be met when an industrial wireless communication system uses a decentralized solution are described.

One terminal device is associated with two clients, forming a redundant client pair, which is pre-marked with an odd tag or an even tag. Herein, an example in which one terminal device is associated with two clients is used for description, or more clients may be associated, and more than two redundant clients may be used.

Each AP maintains two client lists, i.e. an odd client list and an even client list, for all clients associated with the AP.

Each client may indicate, in a process of being associated with the AP, the AP that the client is marked as odd or even, and then the AP puts the client into the corresponding list.

Each AP knows a redundant client partner of each associated client (to be specific, two clients in a redundant client pair are redundant client partners of each other), and knows an AP with which the redundant client partner is associated. In this way, each AP knows an AP with which the redundant client partner exchanges information, and APs associated with the redundant client partners are redundant AP partners of each other.

All the APs share a time-synchronized scheduling cycle (i.e. time synchronization). As described above, the time synchronization may be implemented by using the NTP, the PTP, or the gPTP between the APs.

Still referring to the communication system in FIG. 2, associated APs and clients are connected by using dashed lines. Based on FIG. 2, an odd client list and an even client list of each AP shown in Table 1 below may be obtained.

**Table 1**

| | Odd client list | Even client list |
|---|---|---|
| AP1 | {STA1a, STA3a, ...} | {STA2a, STA5a, ...} |
| AP2 | {STA2b, STA4a, ...} | {STA1b, STA3b, ...} |
| AP3 | {STA5b, ...} | {STA4b, ...} |

In this specific example, the two clients in the redundant client pair are respectively marked as an odd client and an even client to divide the clients into two groups. Each AP maintains a list of two groups of clients. It may be understood that, clients may alternatively be grouped in other modes. For example, the two clients in the redundant client pair are marked as highpriority and low-priority respectively, or a first tag and a second tag are randomly added to the two clients in the redundant client pair. A specific mode of grouping clients is not limited in the present disclosure.

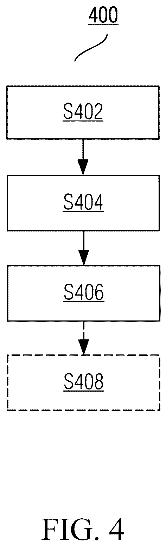

Under the conditions of the foregoing wireless communication system, the communication method shown in FIG. 4 may be performed. FIG. 4 is a flowchart of an exemplary process of a communication method 400 according to another embodiment of the present disclosure.

First, in block S402, each AP first sequentially schedules a corresponding client in a first list thereof.

In block S404, the AP informs a corresponding redundant AP partner of whether the scheduling is successful.

In block S406, if the scheduling is successful, the redundant AP partner no longer schedules the corresponding redundant client partner in a current scheduling cycle. If the scheduling fails, the redundant AP partner schedules the corresponding redundant client partner in a case that the redundant client partner has not been invoked.

In this mode, APs can exchange information with each other, scheduling of clients is coordinated, unnecessary redundant transmission is reduced, and network resources are saved, thereby improving data throughput.

In a case that the scheduling is successful, both the redundant AP partner and the redundant client partner may be configured to transmit other data. The method of the present disclosure mainly resolves a problem of coordinated scheduling of an AP for a client. How to use a free redundant AP to communicate with the client is not described.

In addition, the method 400 may further include step S408. When a client leaves an associated AP, the corresponding AP deletes the client from a list maintained by the AP. If a new client is associated with the AP, the AP adds the client to a corresponding list.

In this mode, management on joining and leaving of clients may be conveniently implemented.

According to the communication method and the communication apparatus of the present disclosure, two solutions are provided, which are centralized and decentralized, and may be applicable to multiple different industrial scenarios. Different communication performance optimization targets, such as improving data throughput, are very flexibly achieved by using different scheduling mechanisms.

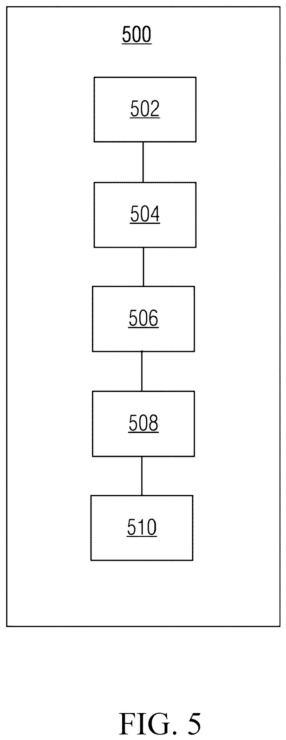

FIG. 5 shows a block diagram of an exemplary configuration of a communication apparatus 500 configured to perform the communication method shown in FIG. 2. In FIG. 5, the communication apparatus 500 includes: a scheduling policy determining unit 502, a scheduling plan determining unit 504, a scheduling instruction unit 506, a scheduling state judging unit 508, and a repetitive control unit 510.

The scheduling policy determining unit 502 is configured to determine a scheduling policy of APs for clients according to a predetermined communication optimization target.

The scheduling plan determining unit 504 is configured to determine a scheduling plan based on the scheduling policy, where the scheduling plan at least includes which client is to be scheduled by each AP at a current scheduling time slot.

The scheduling instruction unit 506 is configured to transmit the scheduling plan to the AP, to instruct the AP to schedule, according to the scheduling plan, the corresponding client for communication.

The scheduling state judging unit 508 is configured to acquire scheduling state information from the AP, where the scheduling state information includes whether the scheduling is successful.

The repetitive control unit 510 is configured to determine a scheduling plan of a next scheduling time slot based on the scheduling state information and a predetermined decision algorithm.

It should be noted that structures of the communication device 500 and composition units thereof shown in FIG. 5 are merely exemplary. A person skilled in the art may modify the structural block diagram shown in FIG. 5 as required.

Details of operations and functions of the parts of the communication apparatus 500 may be, for example, the same as or similar to the relevant parts of the embodiments of the communication method of the present disclosure described with reference to FIG. 1 to FIG. 3, and are not described in detail herein again.

The embodiments of the communication method and the communication apparatus according to the embodiments of the present disclosure are described with reference to FIG. 1 to FIG. 5 above.

As an example, each step of the communication method and each component module and/or unit of the communication apparatus may be implemented as software, firmware, hardware, or a combination thereof. In an appropriate case of implementation by using software or firmware, programs constituting software for implementing the foregoing method may be installed from a storage medium or a network to a computing device having a dedicated hardware structure. When installed with various programs, the computing device can perform various functions and the like.

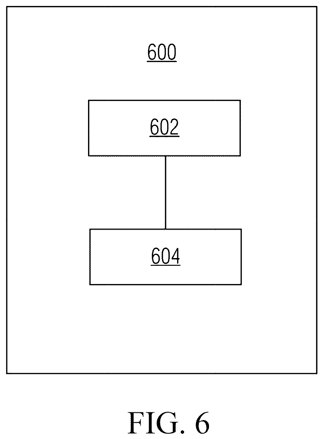

FIG. 6 shows a block diagram of a computing device 600 for implementing a communication method according to an embodiment of the present disclosure. According to one embodiment, the computing device 600 may include at least one processor 602. The processor 602 executes at least one computer-readable instruction (i.e. the foregoing elements implemented in the form of software) stored or encoded in a computer-readable storage medium (i.e. a memory 604).

In one embodiment, computer-executable instructions are stored in the memory 604. The computer-executable instructions, when executed, cause the at least one processor 602 to complete operations performed by a data relay apparatus. In addition, the memory 604 may further store the computer-executable instructions that may enable the processor 602 to complete operations performed by a container management apparatus.

It should be understood that, the computer-executable instructions stored in the memory 604, when executed, cause the at least one processor 602 to perform the various operations and functions described in the foregoing embodiments of the present disclosure with reference to FIG. 1 to FIG. 5.

According to one embodiment, a non-transitory machine-readable medium is provided. The non-transitory machine-readable medium may be provided with instructions (i.e. the foregoing elements implemented in the form of software). The instructions, when executed by a machine, cause the machine to perform the various operations and functions described in the foregoing embodiments of the present disclosure with reference to FIG. 1 to FIG. 5.

According to one embodiment, a computer program is provided, including computer-executable instructions. The computer-executable instructions, when executed, cause at least one processor to perform the various operations and functions described in the foregoing embodiments of the present disclosure with reference to FIG. 1 to FIG. 5.

According to one embodiment, a computer program product is provided, including computer-executable instructions. The computer-executable instructions, when executed, cause at least one processor to perform the various operations and functions described in the foregoing embodiments of the present disclosure with reference to FIG. 1 to FIG. 5.

Exemplary embodiments are described above in combination with specific implementations illustrated in the accompanying drawings, but this does not represent all embodiments that may be implemented or fall within the protection scope of the claims. A term "exemplary" used in the entire specification means "used as an example, an instance, or an illustration", and does not mean "preferred" or "superior" over other embodiments. To provide an understanding of the described technologies, the specific implementations include specific details. However, these technologies may be implemented without these specific details. In some embodiments, to avoid confusing the concept of the described embodiments, a well-known structure and apparatus are shown in a block diagram form.

The descriptions of the content of the present disclosure are provided to allow any person of ordinary skill in the art to implement or use the content of the present disclosure. For a person of ordinary skill in the art, various modifications on the content of the present disclosure are obvious. In addition, a general principle defined in this specification may be applied to other variants without departing from the protection scope of the content of the present disclosure. Therefore, the content of the present disclosure is not limited to the examples and designs described in this specification, but is consistent with the widest range conforming to the principle and novelty disclosed in this specification.

The foregoing descriptions are merely preferred embodiments of the present disclosure, but are not intended to limit the present disclosure. Any modification, equivalent replacement, or improvement made within the spirit and principle of the present disclosure shall fall within the protection scope of the present disclosure.

## Claims

1. A communication method (300) for an industrial wireless communication system, the industrial wireless communication system comprising a first terminal device, second terminal devices, a plurality of access points (AP), and a plurality of clients, the first terminal device being associated with the plurality of APs, each of the second terminal devices being associated with at least two clients in the plurality of clients, at least two of the associated clients forming a redundant client pair, all APs being time-synchronized, the APs implementing communication between the first terminal device and the second terminal devices by scheduling the clients, and the method (300) comprising:
a scheduling policy determining step (S302): determining a scheduling policy of the APs for the clients according to a predetermined communication optimization target;
a scheduling plan determining step (S304): determining a scheduling plan based on the scheduling policy, the scheduling plan at least comprising which client is to be scheduled by each AP at a current scheduling time slot;
a scheduling instruction step (S306): transmitting the scheduling plan to the AP, to instruct the AP to schedule, according to the scheduling plan, the corresponding client for communication;
a scheduling state judging step (S308): acquiring scheduling state information from the AP, the scheduling state information comprising whether the scheduling is successful; and
a repetitive control step (S310): determining a scheduling plan of a next scheduling time slot based on the scheduling state information and a predetermined decision algorithm, and returning to the scheduling instruction step to perform the method.

2. The method (300) according to claim 1, wherein the scheduling policy comprises any one of the following:
scheduling, by the AP, only one client in the redundant client pair at a time; and
simultaneously scheduling, by the AP, two clients in one redundant client pair.

3. The method (300) according to claim 1, wherein the communication optimization target comprises any one of the following:
improving data throughput, reducing a communication latency, and reducing a packet loss rate.

4. The method (300) according to claim 1, wherein the scheduling plan further comprises at least one of the following:
an expected uplink data type and a predetermined timeout period if no response from the client is received.

5. The method (300) according to any one of claims 1 to 4, wherein a decision factor of the predetermined decision algorithm comprises:
each client is scheduled at least once in a cycle, and if no response is received from the client, when to schedule again and a quantity of available scheduling time slots are determined based on availability of the scheduling time slots.

6. A communication method (400) for an industrial wireless communication system, the industrial wireless communication system comprising a first terminal device, second terminal devices, a plurality of access points (AP), and a plurality of clients, the first terminal device being associated with the plurality of APs, all APs being time-synchronized, each of the second terminal devices being associated with at least two clients in the plurality of clients, at least two of the associated clients forming a redundant client pair, one client in the redundant client pair being marked with a first feature, the other client being marked with a second feature, all APs being time-synchronized, each AP maintaining two lists for the clients associated with the AP, the first list comprising the client having the first feature in the redundant client pair, the second list comprising the other client having the second feature in the redundant client pair, the AP knowing a redundant client partner of each client associated therewith and a redundant AP partner associated with the redundant client partner, and the method (400) comprising:
sequentially scheduling, by each AP, the corresponding client in the first list thereof (S402);
informing, by the AP, the corresponding redundant AP partner of whether the scheduling is successful (S404); and
if the scheduling is successful, stopping scheduling, by the redundant AP partner, the corresponding redundant client partner in a current scheduling cycle, and if the scheduling fails, scheduling, by the redundant AP partner, the corresponding redundant client partner in a case that the redundant client partner has not been invoked (S406).

7. The communication method (400) according to claim 6, further comprising:
when a client leaves an associated AP, deleting, by the corresponding AP, the client from a list maintained by the AP; and if a new client is associated with the AP, adding, by the AP, the client to a corresponding list according to the client (S408).

8. A communication apparatus (500) in an industrial wireless communication system, the industrial wireless communication system comprising a first terminal device, second terminal devices, a plurality of access points (AP), and a plurality of clients, the first terminal device being associated with the plurality of APs, each of the second terminal devices being associated with at least two clients in the plurality of clients, at least two of the associated clients forming a redundant client pair, all APs being time-synchronized, the APs implementing communication between the first terminal device and the second terminal devices by scheduling the clients, and the communication apparatus (500) comprising:
a scheduling policy determining unit (502), configured to determine a scheduling policy of the APs for the clients according to a predetermined communication optimization target;
a scheduling plan determining unit (504), configured to determine a scheduling plan based on the scheduling policy, the scheduling plan at least comprising which client is to be scheduled by each AP at a current scheduling time slot;
a scheduling instruction unit (506), configured to transmit the scheduling plan to the AP, to instruct the AP to schedule, according to the scheduling plan, the corresponding client for communication;
a scheduling state judging unit (508), configured to acquire scheduling state information from the AP, the scheduling state information comprising whether the scheduling is successful; and
a repetitive control unit (510), configured to determine a scheduling plan of a next scheduling time slot based on the scheduling state information and a predetermined decision algorithm.

9. An industrial wireless communication system (200), comprising a first terminal device (202), second terminal devices (204-1, 204-2, 204-3, 204-4, 204-5), a plurality of access points (AP) (AP1, AP2, AP3), a plurality of clients (STA1a, STA1b, STA2a, STA2b, STA3a, STA3b, STA4a, STA4b, STA5a, STA5b), and the communication apparatus (500) according to claim 8, the communication apparatus (500) controlling scheduling of the APs for the clients, to implement communication between the first terminal device and the second terminal devices.

10. A computing device (600), comprising:
at least one processor (602); and
a memory (604) coupled to the at least one processor (602), the memory (604) being configured to store instructions, the instructions, when executed by the at least one processor (602), causing the processor (602) to perform the method according to any one of claims 1 to 5.

11. A non-transitory machine-readable storage medium storing executable instructions, the instructions, when executed, causing a machine to perform the method according to any one of claims 1 to 5.

12. A computer program product tangibly stored on a computer-readable medium and comprising computer-executable instructions, the computer-executable instructions, when executed, causing at least one processor to perform the method of any one of claims 1 to 5.
